# FASCICULE DE BREVET EUROPEEN

(11) **EP 3 575 967 B1**
(45) Date de publication et mention de la délivrance du brevet: **17.09.2025**
(21) Numéro de dépôt: 19176100.6
(22) Date de dépôt: 23.05.2019
(51) Int. Cl.: G06F 9/54, H04W 12/06, G06F 21/31, G06F 21/83, H04W 12/041, H04W 12/08, H04W 12/50, H04W 12/0471

(54) **PROCÉDÉ, DISPOSITIF, TERMINAL ET PROGRAMME DE COMMANDE D'ACTIVATION D'UN TERMINAL**
VERFAHREN, VORRICHTUNG, ENDGERÄT UND STEUERPROGRAMM ZUR AKTIVIERUNG EINES ENDGERÄTS
METHOD, DEVICE, TERMINAL AND PROGRAM FOR CONTROLLING THE ACTIVATION OF A TERMINAL

(30) Priorité: 29.05.2018 FR 1854554
(43) Date de publication de la demande: 04.12.2019
(73) Titulaire: Orange, 92130 Issy-les-Moulineaux (FR)
(72) Inventeur: FLOURY, Cédric, 92326 Châtillon (FR)

(56) Documents cités:
- US-A1- 2009 271 710
- US-A1- 2016 197 918
- US-A1- 2016 342 784
- US-A1- 2018 067 713

## Description

### Domaine technique

L'invention appartient au domaine des terminaux et concerne plus particulièrement un procédé pour activer un premier terminal à partir d'un second terminal.

### Art antérieur

De manière classique, un utilisateur interagit avec un ordinateur personnel au moyen de dispositifs d'entrée tels qu'un clavier et ou un dispositif de pointage. Ainsi, pour utiliser plusieurs ordinateurs, plusieurs claviers et souris sont généralement nécessaires. Une telle multiplication de ces dispositifs d'entrée pose un problème d'encombrement.

Des solutions ont été proposées pour mutualiser des dispositifs d'entrées entre différents terminaux. De cette façon, il est possible de réduire l'encombrement d'un bureau lorsque plusieurs ordinateurs sont utilisés. Par exemple un même clavier peut être utilisé pour saisir des données sur différents terminaux.

Une première technique consiste à utiliser un commutateur matériel. Un clavier et une souris sont alors connectés au commutateur, le commutateur étant lui-même connecté au moins deux ordinateurs. Une commande sur le commutateur permet de connecter les dispositifs d'entrée à l'un ou l'autre des ordinateurs auquel le commutateur est connecté.

Une seconde technique consiste à installer un logiciel particulier sur chacun des ordinateurs avec lesquels on souhaite partager un clavier et/ou une souris. Le clavier et/ou la souris sont alors connectés physiquement à un seul ordinateur sur lequel est installé un logiciel serveur dont le rôle est d'intercepter les interactions de l'utilisateur avec le clavier et la souris et de les retransmettre vers un logiciel client installé sur l'ordinateur que l'utilisateur souhaite contrôler. L'utilisateur sélectionne l'ordinateur qu'il souhaite contrôler en déplaçant par exemple sa souris à un emplacement particulier sur l'écran, généralement sur un bord de l'écran. Ainsi, lorsque le pointeur de la souris atteint une position particulière sur l'écran d'un premier ordinateur, le clavier et la souris sont virtuellement connectés à un second ordinateur.

Cette seconde technique permet le partage d'un clavier et d'une souris entre des terminaux hétérogènes, comme par exemple entre un ordinateur et une tablette tactile, indépendamment du système d'exploitation qui les équipe. Il est ainsi possible de configurer un ordinateur et un terminal mobile de façon à ce que lorsque le pointeur de la souris de l'ordinateur atteint par exemple un bord de l'écran, un déplacement supplémentaire du pointeur provoque la redirection des interactions du clavier et de la souris vers le terminal, de sorte que l'utilisateur peut interagir avec le terminal à partir du clavier et de la souris de l'ordinateur.

L'utilisation d'une telle technique avec des terminaux tactiles du type tablette ou smartphone pose toutefois un problème particulier. En effet, ces terminaux ayant une vocation nomade, fonctionnent généralement sur batterie et passent automatiquement dans un mode d'économie d'énergie lorsqu'ils sont inutilisés pendant une certaine période. Ils doivent alors être réactivés par une action manuelle de l'utilisateur avant d'être utilisables, tel que par exemple la saisie d'un code de déverrouillage, ou la réalisation d'un geste particulier sur l'écran du terminal. Tant que le terminal n'est pas déverrouillé, il n'est donc pas possible de le contrôler à partir d'un clavier et d'une souris partagés avec un autre dispositif.

Le fait de devoir déverrouiller manuellement le terminal avant de pouvoir utiliser un clavier et/ou une souris est préjudiciable à l'expérience utilisateur et réduit l'intérêt d'un partage d'un clavier et/ou d'une souris entre un ordinateur et le terminal.

Le document US 2016/342784 A1 décrit un procédé pour verrouiller ou déverrouiller un ordinateur via un terminal déclaré tel qu'un smartphone ou une tablette. L'authentification, par exemple réalisée sur un smartphone, va être propagée et utilisée pour déverrouiller l'ordinateur.

Le document US 2018/067713 A1 décrit une méthode permettant le déport d'affichage sur un écran dédié.

Le document US 2009/271710 A1 décrit un procédé permettant de convertir une première commande en provenance d'un dispositif/périphérique d'entrée d'un terminal en une deuxième commande apte à commander à distance l'affichage d'un dispositif d'affichage.

Ainsi, il existe un besoin pour une solution permettant de déclencher le partage de périphériques d'entrée entre un ordinateur et un terminal tactile sans qu'il soit nécessaire pour l'utilisateur d'effectuer une action manuelle sur le terminal tactile.

### Résumé de l'invention

A cet effet, il est proposé un procédé d'activation d'un premier terminal à partir d'un second terminal, le premier et le second terminal étant connectés par l'intermédiaire d'un réseau de communication, le procédé étant tel qu'il comprend les étapes suivantes réalisées par le second terminal :
- association du premier terminal avec le second terminal,
- détection d'une action sur un périphérique d'entrée associé au second terminal,
- transmission d'une notification au premier terminal, la notification comprenant au moins une commande adaptée pour autoriser le déverrouillage du premier terminal.

De cette façon, contrairement à l'art antérieur, un terminal mobile associé à un ordinateur peut être déverrouillé sans interaction manuelle de l'utilisateur sur le terminal. Une action particulière réalisée avec un périphérique d'entrée de l'ordinateur, tel qu'un déplacement particulier d'une souris connectée à l'ordinateur par exemple, déclenche la transmission d'une commande de déverrouillage vers le terminal mobile. L'association du premier terminal avec le second terminal permet au second terminal de détecter la présence du premier terminal et de sécuriser l'activation du premier terminal en assurant que seul un terminal associé est autorisé à procéder à l'activation.

Le déverrouillage du premier terminal correspond par exemple à la saisie d'un code de sécurité, à la réalisation d'un geste particulier sur un écran du premier terminal, à l'appui sur un bouton ou à toute autre manipulation visant à faire passer le terminal d'un état d'inactivité partielle ou de veille à un état actif apte à accepter des interactions réalisées à l'aide de périphériques d'entrée du second terminal.

Selon une réalisation particulière, le procédé est tel que l'étape d'association du premier terminal avec le second terminal comprend l'échange d'au moins une clef de chiffrement entre les premiers et seconds terminaux, la notification transmise au premier terminal comprenant au moins une donnée chiffrée à l'aide de la clef de chiffrement.

L'utilisation d'un secret partagé tel qu'une clef de chiffrement offre une sécurité accrue en évitant qu'un individu ne puisse prendre le contrôle du premier terminal sans y être autorisé. Ainsi, seul un terminal possédant la clef de chiffrement fournie par le premier terminal peut déclencher son déverrouillage.

Selon un mode de réalisation particulier, le périphérique d'entrée est un périphérique de pointage.

Le premier terminal peut ainsi être déverrouillé à partir d'une action sur une souris ou une surface tactile associée au second terminal. De cette façon, l'utilisateur peut déverrouiller et utiliser le premier terminal en conservant la main sur le dispositif de pointage utilisé avec le second terminal.

Selon un mode particulier de réalisation, l'étape de détection d'une action comprend la détection que le dispositif de pointage est dans une zone de détection particulière de l'écran du second terminal.

Ainsi, un utilisateur peut déverrouiller un terminal mobile tel que le premier terminal en déplaçant simplement le pointeur d'une souris vers une zone particulière de l'écran. L'utilisateur n'a pas besoin de quitter la souris de la main, l'ergonomie est alors optimale.

Selon une réalisation particulière, la zone de détection est une zone rectangulaire définie sur l'écran du second terminal, possédant au moins un côté contigu avec un bord de l'écran du second terminal, le second terminal étant en outre configuré pour transmettre vers le premier terminal des interactions détectées sur des périphériques d'entrée lorsque que le dispositif de pointage atteint ledit bord de l'écran du second terminal.

De manière classique, les techniques permettant de partager la souris d'un ordinateur avec un autre terminal déclenchent le transfert des déplacements de la souris sur l'écran du second terminal lorsque le pointeur atteint un bord de l'écran du premier terminal, et inversement. Lorsque l'action détectée est le positionnement du pointeur de la souris au bord de l'écran, l'exécution des étapes du procédé d'activation introduit un délai avant que le pointeur ne soit utilisable sur le second terminal : le pointeur de la souris va bloquer au bord de l'écran en attendant que la séquence de déverrouillage se termine sur le second terminal.

En proposant l'utilisation d'une zone de détection rectangulaire contigüe avec au moins un bord de l'écran, le procédé permet avantageusement de réduire cette latence.

L'utilisation d'une zone rectangulaire ménage une certaine largeur entre le côté de la zone de détection qui est contigu au bord de l'écran et son côté opposé. Il est ainsi possible de détecter l'arrivée du pointeur dans la zone de détection avant qu'il n'atteigne le bord de l'écran, et ainsi de déclencher la séquence de déverrouillage plus tôt. Le terminal peut de cette façon être déjà réactivé quand le pointeur atteint le bord de l'écran et les mouvements de la souris peuvent être transférés sur le second terminal de manière fluide.

La zone peut également avoir une autre forme. Par exemple, il peut s'agir d'une zone semi-circulaire ayant une intersection avec un bord de l'écran, un rectangle aux coins arrondis, ou tout autre forme dont les dimensions et la position sont telles que le déplacement du pointeur dans la zone est nécessaire pour atteindre un emplacement provoquant le transfert des interactions de la souris sur un terminal associé.

Selon une réalisation particulière, au moins une dimension de la zone de détection est déterminée selon la vitesse de déplacement du dispositif de pointage.

Une dimension de la zone de détection est ainsi déterminée en fonction d'une estimation du temps nécessaire au pointeur pour parcourir la zone selon cette dimension à la vitesse mesurée, la vitesse étant mesurée lorsque le pointeur est hors de la zone de détection. Il est ainsi possible de provoquer le déverrouillage du terminal avant que le pointeur n'atteigne le bord de l'écran du terminal 100.

Lorsque la souris est déplacée rapidement, elle peut traverser la zone de détection et atteindre le bord de l'écran trop vite pour que la séquence de déverrouillage ait eu le temps d'être complétée. En augmentant la taille de la zone de détection lorsque la souris se déplace rapidement, la séquence de déverrouillage est déclenchée plus tôt et a plus de chance de se terminer avant que la souris n'atteigne le bord de l'écran. Par exemple, la distance entre un côté de la zone contigu avec le bord de l'écran et le côté opposé peut être augmenté lorsque la souris se déplace rapidement pour anticiper le déverrouillage, et diminuée lorsque la souris se déplacement lentement pour éviter des déverrouillages intempestifs.

Selon un autre aspect, l'invention vise un dispositif d'activation d'un premier terminal tactile à partir d'un second terminal, le premier et le second terminal étant connectés par l'intermédiaire d'un réseau de communication, le dispositif étant tel qu'il comprend:
- un module d'association d'un terminal avec le dispositif,
- un module de détection d'une action sur un périphérique d'entrée associé au dispositif,
- un module de communication configuré pour transmettre une notification au terminal, la notification comprenant au moins une commande adaptée pour autoriser le déverrouillage du terminal.

Selon encore un autre aspect, il est proposé un terminal comprenant un dispositif d'activation tel que décrit ci-dessus.

Dans un mode particulier de réalisation, les différentes étapes du procédé selon l'invention sont déterminées par des instructions de programmes d'ordinateur.

En conséquence, l'invention vise aussi un programme d'ordinateur comportant des instructions adaptées à la mise en œuvre des étapes d'un procédé tel que décrit ci-dessus, lorsque le programme est exécuté par un processeur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi support d'enregistrement lisible par un ordinateur sur lequel est enregistré un programme d'ordinateur comprenant des instructions pour l'exécution des étapes du procédé.

Le support d'informations peut être n'importe quelle entité ou dispositif capable de stocker le programme. Par exemple, le support peut comporter un moyen de stockage, tel qu'une ROM, par exemple un CD-ROM ou une ROM de circuit microélectronique, une mémoire flash, ou encore un moyen d'enregistrement magnétique, par exemple une disquette (floppy disk) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Les dispositifs, supports d'information et programmes présentent des avantages analogues à ceux du procédé précédemment présenté.

Les différents modes ou caractéristiques de réalisation précités peuvent être ajoutés indépendamment ou en combinaison les uns avec les autres, aux étapes du procédé.

### Brève description des figures

D'autres caractéristiques et avantages apparaîtront à la lecture de modes de réalisation préférés décrits en référence aux figures parmi lesquelles :
- La figure 1 représente une architecture adaptée pour mettre en œuvre le procédé selon un mode de réalisation particulier,
- La figure 2 illustre les étapes du procédé d'activation selon une réalisation particulière,
- La figure 3 représente un terminal sur lequel un écran virtuel est configuré, et
- la figure 4 représente l'architecture d'un dispositif adapté pour mettre en œuvre le procédé.

### Description détaillée

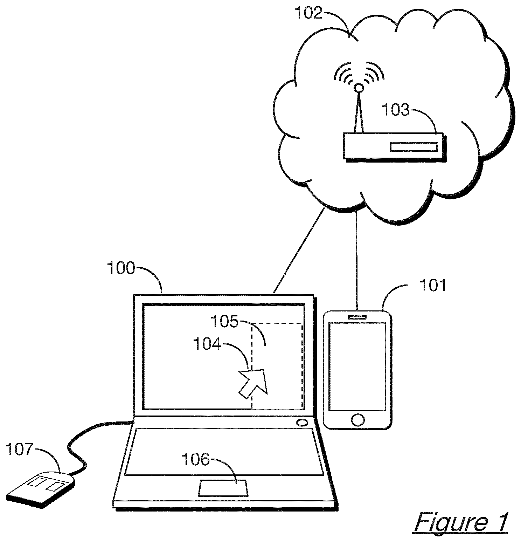

La figure 1 représente un réseau local 102 auquel sont connectés un ordinateur portable 100 et un terminal mobile 101. Le réseau local est par exemple un réseau sans fil de type WiFi comprenant un routeur WiFi 103. Toute autre architecture réseau permettant aux terminaux 100 et 101 de communiquer entre eux peut toutefois être utilisée pour mettre en œuvre le procédé. Par exemple, le réseau 102 peut correspondre à une connexion WiFi ou Bluetooth ad hoc entre les terminaux 100 et 101. Les terminaux 100 et 101 peuvent aussi communiquer par l'intermédiaire d'une connexion de données cellulaire du terminal 101, par une connexion filaire ou par tout autre moyen de communication connu.

Le terminal 101 peut être un terminal mobile, une tablette, un ordinateur personnel, un téléviseur ou tout autre terminal adapté pour être contrôlé par des périphériques de saisie du terminal 100. Le terminal 101 peut en outre comporter un écran tactile.

L'ordinateur 100 comporte au moins un dispositif de pointage, par exemple une souris 107 ou une surface tactile 106 permettant à l'utilisateur de déplacer un pointeur 104 sur l'écran afin de pointer une zone particulière sur l'écran.

En particulier, un utilisateur peut utiliser l'un des dispositifs de pointage pour déplacer le pointeur dans une zone 105 prédéfinie. Sur la figure 1, la zone prédéfinie 105 est représentée en bas à droite de l'écran de l'ordinateur 100, mais tout autre emplacement de la zone prédéfinie peut être envisagé. En outre, la zone prédéfinie peut avoir une forme, des dimensions ou des proportions différentes de celles représentées sur la figure 1.

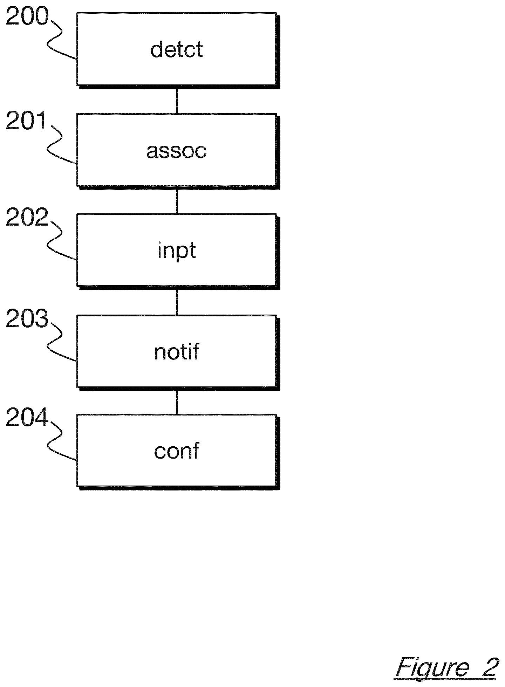

La figure 2 illustre les étapes du procédé d'activation selon une réalisation particulière.

Lors d'une première étape 200, le terminal 100 détecte le terminal 101. Le terminal 100 peut détecter le terminal 101 de plusieurs manières. Par exemple, le terminal 101 peut diffuser à intervalle régulier un message d'annonce indiquant sa disponibilité pour une association. À la réception d'un tel message d'annonce, l'ordinateur 100 peut alors présenter à l'utilisateur une interface l'invitant à associer le terminal ainsi détecté. Bien entendu, plusieurs terminaux 101 peuvent être détectés par l'ordinateur 100. Le terminal 101 peut par exemple diffuser le message d'annonce conformément au standard Bluetooth ou via un réseau Wifi, en utilisant par exemple le protocole « Bonjour » d'Apple ou le standard « UPnP » (RFC6970 IETF « Universal Plug and Play »). Toute technologie permettant la découverte d'un terminal par un autre afin d'échanger des messages est adaptée pour mettre en œuvre l'invention.

En variante, l'étape de détection du terminal 101 par le terminal 100 peut comprendre la désignation explicite du terminal 101, par exemple au moyen d'une adresse IP du terminal 101, d'une SIP URI (RFC3261 IETF « Session Initiation Protocol ») ou d'un numéro de téléphone associé au terminal.

La détection du terminal 101 par le terminal 100 peut aussi être réalisée au travers d'une connexion filaire entre le terminal 101 et l'ordinateur 100, par exemple par une connexion USB du terminal 101 à l'ordinateur 100.

Lors d'une deuxième étape 201, le terminal 101 est associé au terminal 100. Pour cela, le terminal 100 génère un couple clef privée/clef publique. Un tel couple de clef privée/clef publique permet un chiffrage asymétrique d'une communication entre le terminal 100 et le terminal 101 : la clef publique PUK permet à tout terminal qui en dispose de chiffrer des données qui seront uniquement déchiffrables par un terminal détenant la clef privée PRK. De cette façon, l'ordinateur 100 transmet une clef de chiffrement permettant au terminal 101 d'envoyer des données chiffrées que seul l'ordinateur 100 qui détient la clef privée correspondante pourra déchiffrer.

Selon un premier mode de réalisation, le terminal 101 utilise la clef publique reçue pour chiffrer une clef de cryptage symétrique SK propre au terminal 101 et la transmettre au terminal 100.

Les terminaux 100 et 101 possèdent ainsi une même clef de chiffrement symétrique SK permettant de chiffrer et déchiffrer des messages qu'ils échangent, cette clef ayant été échangée de manière sécurisée grâce à la clef publique transmise par le terminal 100. Le chiffrement symétrique présente l'avantage d'être moins coûteux qu'un chiffrement asymétrique, et permet une économie de ressources sur les terminaux.

La confidentialité des échanges entre les terminaux 100 et 101 est ainsi garantie. Une telle disposition permet en outre au terminal 100, respectivement 101 d'authentifier les messages reçus du terminal 101, respectivement 100, car eux seuls détiennent la clef SK permettant de chiffrer/déchiffrer les messages.

Selon un mode de réalisation particulier, le procédé comprend une étape de transmission dans un message chiffré à l'aide de la clef symétrique SK par le terminal 101 à destination du terminal 100 d'un code permettant le déverrouillage du terminal 101. Le terminal 101 utilise la clef publique reçue pour chiffrer un code d'activation adapté pour autoriser le déverrouillage du terminal 101.

Selon une réalisation particulière, le code permettant le déverrouillage est associé sur le terminal 101 à au moins un critère de validité.

Le critère de validité est par exemple une plage temporelle permettant le déverrouillage du terminal 101 uniquement pendant une période temporelle déterminée.

Le critère de validité peut aussi correspondre à un nombre de déverrouillages maximum autorisé avec le code. Par exemple, le critère de validité peut être configuré de manière à n'autoriser qu'un seul déverrouillage du terminal 101 par le terminal 100, de manière à ce qu'une seconde utilisation du même code pour déverrouiller le terminal conduise à un refus de déverrouillage du terminal.

Le critère de validité peut également être une donnée permettant d'identifier un ou plusieurs terminaux autorisés à utiliser le code. Il est ainsi possible de limiter l'utilisation d'un code particulier à un terminal particulier.

Le critère de validité peut aussi être une adresse IP d'un terminal autorisé à utiliser le code, une plage d'adresses IP correspondant à un réseau informatique tel que le réseau 102, à partir duquel l'utilisation du code pour déverrouiller le terminal 101 est possible.

À l'étape 202, le terminal 100 détecte une action de l'utilisateur sur un périphérique d'entrée 107 ou 106 associé au terminal 100. L'ordinateur 100 détecte par exemple un déplacement particulier du pointeur 104 au moyen de la souris 107 ou de la surface tactile 106.

Le déplacement détecté peut être particulier en ce que le déplacement du pointeur 104 sur l'écran du terminal 100 décrit un motif particulier. Par exemple, une action peut être détectée lorsque le déplacement du pointeur 104 correspond à un cercle, un rectangle, une ligne brisée ou tout autre motif géométrique. La détection du motif s'effectue de manière connue à partir d'un historique des positions occupées par le pointeur sur une période temporelle prédéterminée, et/ou par la fermeture d'une forme géométrique par un retour du pointeur à une position initiale. Selon une réalisation particulière, l'action est détectée lorsque le pointeur est déplacé successivement d'un coin de l'écran à un autre coin de l'écran de l'ordinateur 100, par exemple du coin supérieur droit de l'écran au coin inférieur droit de l'écran.

Selon un mode de réalisation particulier, le terminal 100 détecte une action lorsque le pointeur 104 est déplacé dans une zone particulière de l'écran, par exemple dans la zone 105 représentée sur la figure 1. La zone 105 est par exemple une zone rectangulaire d'une hauteur sensiblement égale à la hauteur de l'écran du terminal 101 et positionnée de manière à ce qu'au moins un côté de la zone rectangulaire corresponde à un bord de l'écran. De cette façon, lorsque le terminal 101 est positionné à droite de l'écran comme sur la figure 1, en utilisant par exemple sur un support adapté, l'écran du terminal 101 se trouve dans le prolongement de la zone de détection 105. La zone de détection peut être positionnée différemment selon que le terminal 101 est positionné à droite, à gauche au-dessus ou en dessous de l'écran du terminal 100. Une telle disposition est avantageuse dans la mesure ou les logiciels de partage de clavier déclenchent généralement le transfert des commandes de clavier et souris d'un premier terminal vers un second terminal associé lorsque le pointeur de la souris atteint un bord prédéfini de l'écran du premier terminal: le côté de la zone de détection 105 correspond ainsi au bord de l'écran configuré pour déclencher un transfert des interactions souris/clavier vers le terminal 101. De cette façon le pointeur 104 est détecté dans la zone 105 avant d'atteindre le bord droit de l'écran de l'ordinateur 100 de la figure 1.

Selon un mode particulier de réalisation, la largeur de la zone de détection 105 est modifiée selon la vitesse de déplacement du pointeur 104 sur l'écran du terminal 101. La largeur de la zone 105 est alors déterminée par une durée T nécessaire au pointeur 104 pour parcourir horizontalement la zone 105. Pour cela, l'ordinateur 100 mesure la vitesse de déplacement du pointeur et détermine la largeur de la zone 105 de façon à ce le déplacement du pointeur 104 d'un côté à l'autre de la zone 105 à la vitesse mesurée corresponde à la durée T. Par exemple, si la largeur de la zone 105 est configurée avec une durée T égale à 20 millisecondes et que l'ordinateur 100 constate que le pointeur parcourt 5 centimètres en 10 millisecondes, une zone de 10 centimètres de largeur sera définie.

Selon une réalisation particulière, la durée T est déterminée selon le temps nécessaire pour déverrouiller le terminal 101. De cette manière, entre le moment où le pointeur 104 entre dans la zone 105 par la gauche et le moment où le pointeur 104 atteint le bord droit de l'écran de l'ordinateur 100, le terminal 101 a pu être déverrouillé.

Bien entendu, dans la description relative à la zone de détection 105 qui précède, les termes « largeur » et « hauteur » de la zone peuvent être inversés selon la position relative du terminal par rapport à l'écran. Ainsi, lorsque le terminal est positionné au-dessus ou au-dessous de l'écran du terminal 100, la zone de détection 105 à une largeur sensiblement égale à la largeur de l'écran du terminal 101.

Lorsqu'une action est détectée à l'étape 202, l'ordinateur 100 met en œuvre une étape 203 de transmission d'une notification au terminal 101, la notification comprenant au moins une commande adaptée pour déverrouiller le premier terminal. La notification est par exemple un message chiffré à l'aide de la clef de chiffrement SK échangée à l'étape d'association 201. La notification peut également être un message de type « notification push » dont l'envoi est déclenché par l'ordinateur 100.

Une telle notification comprend une commande de déverrouillage telle qu'un code de déverrouillage transmis à l'ordinateur 100 par le terminal 101 lors de l'étape d'association.

À la réception d'une telle notification, le terminal 101 déchiffre le message et vérifie la validité du code de déverrouillage. Si le code de déverrouillage est valide, c'est-à-dire s'il vérifie les critères décrits précédemment, le terminal 101 est déverrouillé et un message de confirmation est envoyé à l'ordinateur 100.

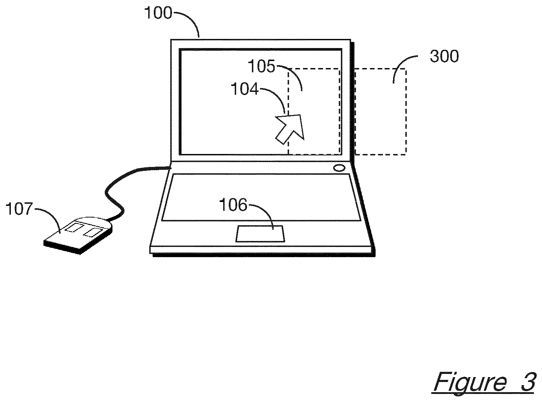

L'ordinateur 100 reçoit la confirmation de déverrouillage lors d'une étape 204 au cours de laquelle un écran virtuel 300 contigu à la zone de détection 105 est configuré sur l'ordinateur 100, comme représenté sur la figure 3. L'écran virtuel 300 possède des dimensions sensiblement égales aux dimensions de l'écran du terminal 100. Lorsque le pointeur 104 atteint le bord droit de la zone de détection 105, le déplacement du pointeur est prolongé sur l'écran du terminal 101 de manière à refléter sur l'écran du terminal 101 les déplacements du dispositif de pointage associé au terminal 100. Pour cela, le terminal 100 transmet régulièrement au terminal 101 les coordonnées du pointeur 104, ainsi que d'autres interactions de l'utilisateur avec le dispositif de pointage, par exemple une information selon laquelle l'utilisateur a effectué une pression sur un bouton de la souris 107. Une telle configuration d'un écran virtuel pour prolonger les déplacements d'un pointeur sur l'écran d'un terminal distinct du terminal auquel est relié le dispositif de pointage étant connu de l'homme du métier, elle ne sera pas détaillée ici plus en détail.

Le procédé d'activation permet ainsi d'effectuer un déverrouillage du terminal 101 à partir d'un périphérique de pointage associé à l'ordinateur 100. De cette façon, l'utilisateur n'a pas à effectuer de manipulation sur le terminal pour effectuer le déverrouillage. L'utilisation d'une zone de détection telle que la zone 105 décrite précédemment permet d'anticiper l'arrivée du pointeur dans la zone d'écran virtuel. Ainsi, le terminal 101 peut être déverrouillé avant que le pointeur n'atteigne l'écran virtuel configuré. De cette façon, l'utilisateur n'attend pas le déverrouillage pour poursuivre un déplacement du pointeur vers l'écran virtuel correspondant à l'écran du terminal, l'expérience utilisateur en est améliorée.

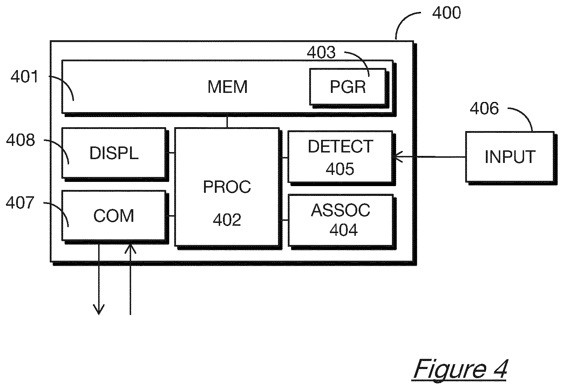

La figure 4 représente l'architecture matérielle d'un dispositif 400 adapté pour mettre en œuvre le procédé d'activation selon un mode de réalisation particulier.

Le dispositif 400 comprend un espace de stockage 401, par exemple une mémoire MEM, une unité de traitement 402 équipée par exemple d'un processeur PROC. L'unité de traitement peut être pilotée par un programme 403, par exemple un programme d'ordinateur PGR, mettant en œuvre le procédé de répartition tel que décrit ci-avant en référence à la figure 2, et notamment les étapes d'association du dispositif avec un terminal, de détection d'une action sur un périphérique d'entrée associé au dispositif, et de transmission d'une notification au terminal, la notification comprenant au moins une commande adaptée pour déverrouiller le terminal. Selon une réalisation particulière, le programme d'ordinateur PGR est configuré pour mettre en œuvre le procédé selon les différents modes ou caractéristiques de réalisation décrits précédemment.

À l'initialisation, les instructions du programme d'ordinateur 403 sont par exemple chargées dans une mémoire RAM (Random Access Memory en anglais) avant d'être exécutées par le processeur de l'unité de traitement 402. Le processeur de l'unité de traitement 402 met en œuvre les étapes du procédé d'activation selon les instructions du programme d'ordinateur 403.

Pour cela, le dispositif 400 comprend un module d'association 404 du dispositif avec un terminal. Un tel module peut comprendre des moyens de détection d'un terminal et de mémorisation d'une association du dispositif avec le terminal. Les moyens de détection sont par exemple mis en œuvre par un programme d'ordinateur comprenant des instructions adaptées pour être exécutées par le processeur PROC du dispositif 400 et configurées pour recevoir, à partir d'une interface de communication du dispositif, un message d'annonce ou de découverte diffusé par un terminal. Le module d'association comprend aussi des moyens pour générer un couple clef privée/clef publique adapter pour chiffrer une communication avec un terminal détecté et de recevoir de manière sécurisée en provenance du terminal un élément d'authentification permettant le déverrouillage du terminal par le dispositif. Les moyens d'association comprennent des instructions de programme d'ordinateur configurées pour générer un couple de clefs privée/publique, par exemple en mettent en œuvre un algorithme de type RSA, les instructions étant adaptées pour être exécutée par un processeur tel que le processeur PROC. Le module d'association comprend en outre une mémoire, par exemple une base de données, adaptée pour mémoriser les clefs générées en association avec un identifiant du terminal détecté.

Le dispositif 400 comprend aussi un module 405 de détection d'une action sur un périphérique d'entrée 406 associé au dispositif. Un tel module est par exemple mis en œuvre par des instructions de programme d'ordinateur configurées pour détecter des interactions d'un utilisateur sur un périphérique d'entrée associé au dispositif et adaptées pour être exécutées par le processeur PROC du dispositif. Par exemple, les instructions sont configurées pour obtenir des coordonnées d'un pointeur de souris connectée sur un écran du dispositif, et déterminer à partir des coordonnées obtenues qu'une action particulière a été réalisée en vérifiant que les coordonnées obtenues correspondent à un déplacement prédéterminé dont les caractéristiques sont mémorisées au préalable dans une mémoire du dispositif. Le périphérique d'entrée 406 est par exemple une souris d'ordinateur, une surface tactile, un clavier ou tout autre dispositif permettant à un utilisateur d'interagir avec le dispositif.

Selon un mode de réalisation particulier, le module de détection est adapté pour détecter le déplacement d'un pointeur associé au dispositif de pointage 406 dans une zone particulière d'un écran 408 du dispositif. Pour cela, le module de détection comprend des instructions de programme d'ordinateur configurées pour obtenir des coordonnées sur l'écran 408 d'un pointeur associé au périphérique d'entrée 406 et comparer ces coordonnées avec les coordonnées d'une zone définie sur l'écran du dispositif. Les instructions sont en outre configurées de façon à ce que lorsque la comparaison indique que le pointeur se déplace ou se situe à l'intérieur de la zone définie sur l'écran, le module de détection commande le module de communication 407 la transmission d'une notification adaptée pour déverrouiller le terminal.

De façon optionnelle, le dispositif peut comprendre un module de détermination d'au moins une dimension de la zone de détection selon la vitesse de déplacement du dispositif de pointage. Pour cela, le module de détermination peut comprendre une mémoire dans laquelle sont mémorisées des instructions configurées pour calculer une vitesse de déplacement d'un pointeur sur un écran du dispositif, par exemple en obtenant à intervalle régulier la position du pointeur. Les instructions sont en outre configurées pour définir une dimension de la zone de détection en corrélation avec la vitesse déterminée, de façon à ce que plus la vitesse mesurée est importante, plus la taille de la zone de détection est importante.

Le dispositif 400 comprend en outre un module de communication 407 configuré pour transmettre une notification au premier terminal, la notification comprenant au moins une donnée d'authentification adaptée pour déverrouiller le premier terminal. Le module de communication est par exemple une interface réseau Ethernet, Wifi ou Bluetooth, une interface réseau cellulaire ou encore un lien de communication série tel qu'un câble USB. Le module de communication est par exemple piloté par des instructions de programme d'ordinateur adaptées pour générer un message comprenant un élément chiffré généré par le module d'association 404, et adapté pour autoriser le déverrouillage du terminal associé au dispositif lorsque le terminal reçoit le message comprenant un tel élément chiffré.

Selon un mode particulier de réalisation, le dispositif est intégré à un ordinateur personnel, un terminal mobile ou une tablette.

## Revendications

1. Procédé d'activation d'un premier terminal à partir d'un second terminal, le premier et le second terminal étant associés et connectés par l'intermédiaire d'un réseau de communication, le procédé étant **caractérisé en ce qu'**il comprend les étapes suivantes réalisées par le second terminal :
- détection (202) d'une action sur un périphérique de pointage associé au second terminal, au niveau d'une zone rectangulaire prédéfinie sur l'écran du second terminal possédant au moins un côté contigu avec un bord de l'écran du second terminal ;
- transmission (203) d'une notification au premier terminal lorsque l'action est détectée, la notification comprenant au moins une commande adaptée pour déverrouiller le premier terminal ;
- Transmission, à destination dudit premier terminal, d'au moins une interaction détectée sur ledit périphérique de pointage lorsque celui-ci atteint ledit bord de l'écran dudit second terminal.

2. Procédé selon la revendication 1 dans lequel l'étape d'association du premier terminal avec le second terminal comprend l'échange d'au moins une clef de chiffrement entre les premiers et seconds terminaux, la notification transmise au premier terminal comprenant au moins une donnée chiffrée à l'aide de la clef de chiffrement.

3. Procédé selon la revendication 1 dans lequel au moins une dimension de la zone de détection est déterminée selon la vitesse de déplacement du dispositif de pointage.

4. Dispositif (400) d'activation d'un terminal, le terminal étant connecté et associé au dispositif par l'intermédiaire d'un réseau de communication, le dispositif étant **caractérisé en ce qu'**il comprend :
- un module (405) de détection d'une action sur un périphérique de pointage (406) associé au dispositif, au niveau d'une zone rectangulaire prédéfinie sur l'écran du dispositif possédant au moins un côté contigu avec un bord de l'écran du dispositif ;
- un module (407) de communication configuré pour transmettre une notification au terminal lorsque l'action est détectée, la notification comprenant au moins une commande adaptée pour autoriser le déverrouillage du terminal ;
- un module de communication configuré pour transmettre, à destination dudit premier terminal, au moins une interaction détectée sur ledit périphérique de pointage lorsque celui-ci atteint ledit bord de l'écran dudit second terminal.

5. Terminal comprenant un dispositif selon la revendication 4.

6. Support d'informations lisible par un processeur sur lequel est enregistré un programme d'ordinateur comprenant des instructions pour l'exécution des étapes du procédé d'activation selon l'une des revendications 1 à 3.

7. Programme d'ordinateur comportant des instructions pour l'exécution des étapes d'un procédé d'activation selon l'une quelconques des revendications 1 à 3 lorsque ledit programme est exécuté par un ordinateur.

## Patentansprüche

1. Verfahren zur Aktivierung eines ersten Endgeräts von einem zweiten Endgerät aus, wobei das erste und das zweite Endgerät zugeordnet sind und über ein Kommunikationsnetz verbunden sind, wobei das Verfahren **dadurch gekennzeichnet ist, dass** es die folgenden von dem zweiten Endgerät ausgeführten Schritte umfasst:
- Detektieren (202) einer Aktion an einem Zeige-Peripheriegerät, das dem zweiten Endgerät zugeordnet ist, in einem vorgegebenen rechteckigen Bereich auf dem Bildschirm des zweiten Endgeräts, der mindestens eine an einen Rand des Bildschirms des zweiten Endgeräts angrenzende Seite besitzt;
- Übertragen (203) einer Mitteilung an das erste Endgerät, wenn die Aktion detektiert wird, wobei die Mitteilung mindestens einen zum Entsperren des ersten Endgeräts geeigneten Befehl umfasst;
- Übertragen, an das erste Endgerät, mindestens einer Interaktion, die an dem Zeige-Peripheriegerät detektiert wird, wenn dieses den Rand des Bildschirms des zweiten Endgeräts erreicht.

2. Verfahren nach Anspruch 1, wobei der Schritt des Zuordnens des ersten Endgeräts zu dem zweiten Endgerät das Austauschen mindestens eines Verschlüsselungsschlüssels zwischen den ersten und zweiten Endgeräten umfasst, wobei die an das erste Endgerät übertragene Mitteilung mindestens ein mithilfe des Verschlüsselungsschlüssels verschlüsseltes Datenelement umfasst.

3. Verfahren nach Anspruch 1, wobei mindestens eine Abmessung des Detektionsbereichs entsprechend der Bewegungsgeschwindigkeit der Zeigevorrichtung bestimmt wird.

4. Vorrichtung (400) zur Aktivierung eines Endgeräts, wobei das Endgerät mit der Vorrichtung über ein Kommunikationsnetz verbunden und ihr zugeordnet ist, wobei die Vorrichtung **dadurch gekennzeichnet ist, dass** sie umfasst:
- ein Detektionsmodul (405) zum Detektieren einer Aktion an einem Zeige-Peripheriegerät (406), das dem zweiten Endgerät zugeordnet ist, in einem vorgegebenen rechteckigen Bereich auf dem Bildschirm des zweiten Endgeräts, der mindestens eine an einen Rand des Bildschirms des zweiten Endgeräts angrenzende Seite besitzt;
- ein Kommunikationsmodul (407), das dazu ausgestaltet ist, eine Mitteilung an das Endgerät zu übertragen, wenn die Aktion detektiert wird, wobei die Mitteilung mindestens einen Befehl umfasst, der dazu geeignet ist, das Entsperren des Endgeräts zuzulassen;
- ein Kommunikationsmodul, das dazu ausgestaltet ist, an das erste Endgerät, mindestens eine Interaktion zu übertragen, die an dem Zeige-Peripheriegerät detektiert wird, wenn dieses den Rand des Bildschirms des zweiten Endgeräts erreicht.

5. Endgerät, das eine Vorrichtung nach Anspruch 4 umfasst.

6. Informationsträger, der von einem Prozessor lesbar ist und auf dem ein Computerprogramm gespeichert ist, das Anweisungen zum Ausführen der Schritte des Verfahrens zur Aktivierung nach einem der Ansprüche 1 bis 3 umfasst.

7. Computerprogramm, das Anweisungen umfasst, die bei der Ausführung des Programms durch einen Computer die Schritte eines Verfahrens zur Aktivierung nach einem der Ansprüche 1 bis 3 ausführen.

## Claims

1. Method for activating a first terminal from a second terminal, the first terminal and the second terminal being associated and connected via a communication network, the method being **characterized in that** it comprises the following steps performed by the second terminal:
- detection (202) of an action on a pointing peripheral device associated with the second terminal, in a predefined rectangular zone on the screen of the second terminal having at least one side contiguous with an edge of the screen of the second terminal;
- transmission (203) of a notification to the first terminal when the action is detected, the notification comprising at least one command suitable for unlocking the first terminal;
- transmission, to said first terminal, of at least one interaction detected on said pointing peripheral device when the latter reaches said edge of the screen of said second terminal.

2. Method according to Claim 1, wherein the step of association of the first terminal with the second terminal comprises the exchange of at least one encryption key between the first and second terminals, the notification transmitted to the first terminal comprising at least one datum encrypted using the encryption key.

3. Method according to Claim 1, wherein at least one dimension of the detection zone is determined according to the speed of movement of the pointing device.

4. Device (400) for activating a terminal, the terminal being connected to and associated with the device via a communication network, the device being **characterized in that** it comprises:
- a module (405) for detecting an action on a pointing peripheral device (406) associated with the device, in a predefined rectangular zone on the screen of the device having at least one side contiguous with an edge of the screen of the device;
- a communication module (407) configured to transmit a notification to the terminal when the action is detected, the notification comprising at least one command suitable for authorizing the unlocking of the terminal;
- a communication module configured to transmit, to said first terminal, at least one interaction detected on said pointing peripheral device when the latter reaches said edge of the screen of said second terminal.

5. Terminal comprising a device according to Claim 4.

6. Processor-readable information medium on which is stored a computer program comprising instructions for the execution of the steps of the activation method according to one of Claims 1 to 3.

7. Computer program comprising instructions for the execution of the steps of an activation method according to any one of Claims 1 to 3 when said program is run by a computer.
